Europäisches Patentamt

European Patent Office

Office européen des brevets

(19)

(11) Veröffentlichungsnummer : **0 400 014 B1**

(12)                 **EUROPÄISCHE PATENTSCHRIFT**

(45) Veröffentlichungstag der Patentschrift :
16.09.92 Patentblatt 92/38

(51) Int. Cl.⁵ : **B01J 8/06**

(21) Anmeldenummer : **89900237.2**

(22) Anmeldetag : **13.12.88**

(86) Internationale Anmeldenummer :
**PCT/EP88/01146**

(87) Internationale Veröffentlichungsnummer :
**WO 90/06807 28.06.90 Gazette 90/15**

(54) **ROHRBÜNDELREAKTOR.**

(43) Veröffentlichungstag der Anmeldung :
05.12.90 Patentblatt 90/49

(45) Bekanntmachung des Hinweises auf die
Patenterteilung :
16.09.92 Patentblatt 92/38

(84) Benannte Vertragsstaaten :
**BE DE FR GB IT NL**

(56) Entgegenhaltungen :
**EP-A- 0 284 016**
**EP-A- 0 285 920**
**DE-A- 2 559 661**
**DE-C- 2 201 528**

(73) Patentinhaber : **DEGGENDORFER WERFT
UND EISENBAU GMBH
Postfach 1209 Werftstrasse 17
W-8360 Deggendorf (DE)**

(72) Erfinder : **GÜTLHUBER, Friedrich
Gartenstrasse 4
W-8354 Metten (DE)**

(74) Vertreter : **Bauer, Robert, Dipl.-Ing.
Boeters & Bauer Patentanwälte Bereiteranger
15
W-8000 München 90 (DE)**

## Beschreibung

Die Erfindung betrifft einen Rohrbündelreaktor gemäß Gattungsbegriff des Anspruchs 1.

Derartige Rohrbündelreaktoren stellen eine häufig gewünschte und vielfach unverzichtbare Bau- und Betriebsform größerer Chemiereaktoren dar. Sie können mit Parallel-, Radial-, Querstrom- oder doppelter Querstromführung des Wärmeträgers ausgeführt sein, womit die durch Einbauten wie Umlenk- und/oder Verteilerbleche erzwungene Hauptströmungsrichtung des Wärmeträgers in bezug auf das Reaktionsrohrbündel bezeichnet ist. In jedem Fall ist der in das Reaktorgehäuse eintretende Wärmeträger gezwungen, zu einem wesentlichen Teil seinen Weg zunächst einmal entlang dem dortigen Rohrboden oder Trennblech zu nehmen. Dabei erhebt sich mit zunehmender Länge der betreffenden Querströmung und zunehmendem dortigem Temperaturunterschied zwischen Reaktionsgas und Wärmeträger in zunehmendem Maße das Problem, daß sich ein an dem betreffenden Rohrboden bzw. Trennblech mehr oder weniger unmittelbar entlangstreichender Anteil des Wärmeträgers in unerwünscht starkem Maße abkühlt. Dies ist verständlich, hält man sich vor Augen, daß das dort eintretende Reaktionsgas beispielsweise eine Temperatur von 100 oder 150 °C haben mag, während die Reaktionstemperatur und infolgedessen auch die Temperatur des Wärtmeträgers bei beispielsweise 400 °C liegt. Die durch die erwähnte unverhältnismäßig starke Abkühlung bewirkten Temperaturunterschiede zwischen verschiedenen Schichten des Wärmeträgers bleiben in mehr oder weniger starkem Maße auch im weiteren Strömungsverlauf bestehen und führen infolgedessen zu unterschiedlichen Temperaturen wie auch Temperaturprofilen der einzelnen Kontaktrohre, worunter Ausbeute und Selektivität leiden können. Die genannten Temperaturunterschiede durch Erhöhung der Durchflußgeschwindigkeit des Wärmeträgers zu verringern würde einen unverhältnismäßig starken Anstieg der Pumpenleistung und damit auch des Energieverbrauchs bedingen.

Von daher liegt der Erfindung die Aufgabe zugrunde, einen Rohrbündelreaktor nach Gattungsbegriff so auszubilden, daß Temperaturen und Temperaturprofile der einzelnen Kontaktrohre weitgehend gleich gehalten werden können, ohne daß es dazu einer ins Gewicht fallenden Erhöhung der Pumpenleistung bedarf.

Diese Aufgabe ist erfindungsgemäß durch das kennzeichnende Merkmal des Anspruchs 1 gelöst. Die Unteransprüche geben darüber hinausgehend vorteilhafte Ausgestaltungsmöglichkeiten an.

Der betreffende Bypasskanal bewirkt, daß der an dem eintrittsseitigen Rohrboden oder Trennblech unverhältnismäßig stark abgekühlte Anteil des Wärmeträgers unter Umgehung des Kontaktrohrbündels samt eventuellen weiteren strömungsleitenden Einbauten, wie Umlenk- und Verteilerblechen, unmittelbar zum Austrittsbereich des Wärmeträgers oder jedenfalls einer diesem nähergelegenen Stelle innerhalb des Reaktorgehäuses findet, wo seine vergleichsweise geringe Temperatur unschädlich oder sogar erwünscht ist. Letzteres kann beispielsweise in der Höhe des Hot Spot und dort wiederum im Inneren eines nach innen reichenden Umlenkbleches der Fall sein.

Der erfindungsgemäße Bypasskanal ist konstruktiv einfach zu verwirklichen. Er erfordert zwar in der Mitte des Rohrbündels einen Freiraum, jedoch ist ein solcher bei größeren Reaktoren aus strömungstechnischen Gründen ohnedies zweckmäßig, wie in der DE-PS 25 59 661 dargelegt.

Nachfolgend werden einige Ausführungsbeispiele erfindungsgemäßer Rohrbündelreaktoren anhand der Zeichnungen genauer beschrieben. Dabei zeigt

Fig. 1 einen stehenden Rohrbündelreaktor mit zylindrischem Rohrbündel, schematisiert im Mittellängsschnitt, wobei Reaktionsgas und Wärmeträger am unteren Ende eintreten,

Fig. 2 in ähnlicher Darstellung einen Rohrbündelreaktor mit zwei einander gegenüberstehenden Rohrbündelgruppen und doppelter Querstromführung des Wärmeträgers,

Fig. 3 und 4 jeweils, in einem schematischen Querschnitt des Reaktors nach Fig. 2 etwa in Höhe der Linie A-A, verschieden Ausführungen des betreffenden Bypasskanals und

Fig. 5 in wiederum ähnlicher Darstellung wie Fig. 1 einen Rohrbündelreaktor mit zylindrischem Rohrbündel, wobei der den Wärmeträger aufnehmende Raum des Reaktorbehälters freilich durch ein Trennblech in zwei übereinanderliegende getrennte Abschnitte entsprechend stark unterschiedlichen Wärmeaustauschbedürfnissen unterteilt ist.

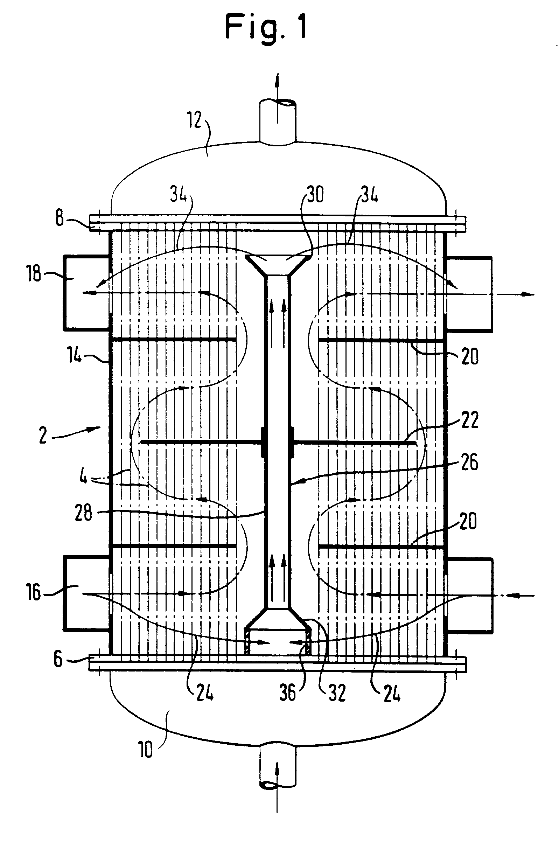

Der in Fig. 1 dargestellte Rohrbündelreaktor 2 enthält ein zylindrisches Reaktionsrohrbündel 4, das in Rohrböden 6 und 8 endet. Dem Rohrbündel 4 wird das Reaktionsgas von unten her durch eine Haube 10 zugeführt, während eine ebensolche obere Haube 12 das durch das Rohrbündel hindurchgetretene, umgesetzte Gas sammelt. Der Innenraum des Reaktors 2 zwischen den Rohrböden 6 und 8 ist außerhalb der Rohre des Rohrbündels 4 von einem diese umspülenden Wärmeträger, beispielsweise einer Salzschmelze, erfüllt, der dem Reaktorgehäuse 14 in der Nähe des unteren Rohrbodens 6 radial durch einen Ringkanal 16 zugeführt und entsprechend in der Nähe des oberen Rohrbodens 8 durch einen Ringkanal 18 ab- und einem nicht gezeigten außenliegenden Wärmetauscher zugeführt wird. Zwischen den beiden Rohrböden 6 und 8 ist der Wärmeträger gezwungen, mäanderförmig um in verschiedenen Ebenen angeordnete Umlenkbleche 20 und 22 herumzuströmen, um das Rohrbündel so im wesentlichen "im Querstrom", d.h. hier radial, zu passieren. Die Umlenkbleche 20 und 22 weisen gewöhnlich Durchtrittsöffnungen für die einzelnen Rohre auf, die um diese herum einen Spalt bestehen lassen, und die einzelnen Spalte können so bemessen sein, daß ein mehr oder weniger großer Teilstrom des Wärmeträgers dort in Axialrichtung des Reaktors hindurchzutreten vermag, um in dem Rohrbündel 4 ein gewünschtes Temperaturfeld zu ergeben (vergl. insoweit beispielsweise die DE-OS 2 201 528 / Positionen 7 und 8). Der Reaktor 2 ist von demjenigen Typ, der im Inneren des Rohrbündels 4 einen koaxialen, von Kontaktrohren freigehaltenen zylindrischen Innenraum bestehen läßt (vergl. DE-OS 25 59 661).

Während die mittlere Reaktionstemperatur in dem Rohrbündel 4 und damit auch die Temperatur des Wärmeträgers beispielsweise bei ca. 400 °C liegt, gleichgültig ob die Reaktion exotherm oder endotherm abläuft, tritt das Reaktionsgas durch die Haube 10 hindurch in das Rohrbündel mit einer Temperatur von beispielsweise ca. 100 °C ein. Hierdurch wird der untere Rohrboden 6 naturgemäß in erheblichem Maße gekühlt, und dieser Kühleffekt teilt sich auch den daran angrenzenden Schichten des Wärmeträgers mit. Da diese Schichten nicht in Ruhe bleiben, sondern einen Teilstrom bilden, wie er durch die Pfeile 24 angedeutet ist, kommt es normalerweise dazu, daß dieser unterkühlte Teilstrom das Rohrbündel an zudem noch nicht befriedigend kontrollierbaren Stellen auf Temperaturen kühlt, die dem Reaktionsverlauf abträglich sind.

Um dem zu begegnen, ist nun in dem dargestellten Reaktor 2 für den durch die Pfeile 24 angegebenen Teilstrom ein Bypasskanal 26 vorgesehen, der in diesem Fall aus einem koaxialen Leitrohr 28 mit trichterartigen Erweiterungen 30 und 32 an seinen beiden Enden in der Nähe des Rohrbodens 6 bzw. 8 besteht. Durch diesen Bypasskanal 26 wird der durch die Pfeile 24 bezeichnete Teilstrom des Wärmeträgers unmittelbar dem Austrittsende des Rohrbündels 4 zugeführt, ohne mit dem Rohrbündel bis dahin weiter in Kontakt treten zu können. Am Austrittsende des Rohrbündels 4 in der Nähe des Rohrbodens 8 findet dieser Teilstrom gemäß Pfeilen 34 nach außen, zu dem Ringkanal 18, etwa in der gleichen Weise, wie er von dem Ringkanal 16 ins Zentrum des Rohrbündels gefunden hat. Dabei kann angenommen werden, daß die Reaktion am Austrittsende des Rohrbündels 4 abgeschlossen und dort eine verstärkte Kühlung des umgesetzten Gases ohnedies wünschenswert ist.

Um die Strömung des genannten Teilstromes in und durch das Leitrohr 28 noch zu verbessern, kann der zylindrische periphere Eintrittsquerschnitt zwischen Rohrboden 6 und Erweiterung 32, wie gezeigt, mit einer siebartigen Lochplatte 36 abgedeckt sein.

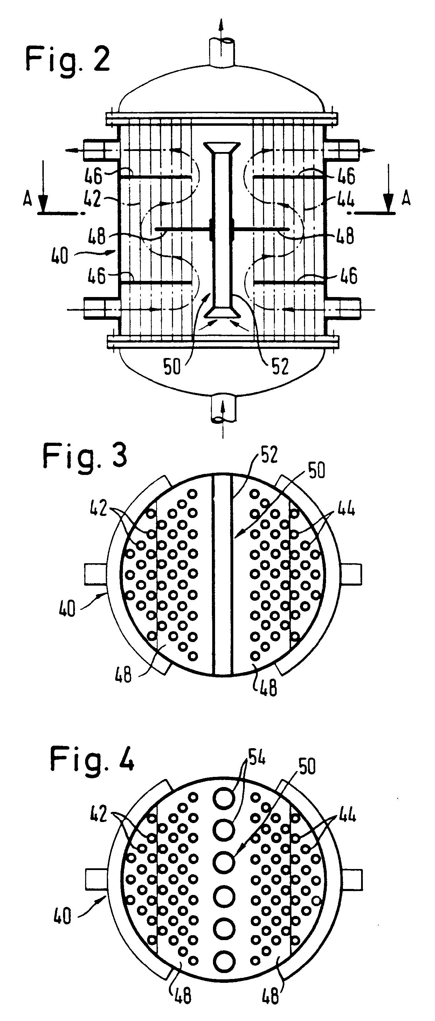

In Fig. 2 ist ein Rohrbündelreaktor 40 dargestellt, der anstelle eines hohlzylindrischen Rohrbündels gemäß Fig. 1 zwei mit Abstand einander gegenüberstehende Rohrbündelgruppen 42 und 44 aufweist und entsprechend von dem auf gegenüberliegenden Seiten eintretenden Wärmeträger im sog. doppelten Querstrom durchströmt wird, während sein sonstiger innerer Aufbau mit miteinander abwechselnden Umlenkblechen 46 und 48 prinzipiell demjenigen von Fig. 1 entspricht.

In diesem Fall nun ist ein Bypasskanal 50 im Raum zwischen den beiden Rohrbündelgruppen 42 und 44 angeordnet. Die Figuren 3 und 4 zeigen zwei unterschiedliche Ausführungsformen desselben.

Nach Fig. 3 besteht der Bypasskanal 50 im wesentlichen aus einem über die gesamte Breite des Reaktors 40 reichenden kastenförmigen Leitkanal 52, nach Fig. 4 aus einer Zeile einzelner Leitrohre 54. In jedem Fall können wiederum an beiden Enden Erweiterungen ähnlich den Erweiterungen 30 und 32 aus Fig. 1 vorgesehen sein, und ebenso kann sich am Eintrittsquerschnitt zur verbesserten Strömungsführung eine Lochplatte ähnlich der Lochplatte 36 befinden.

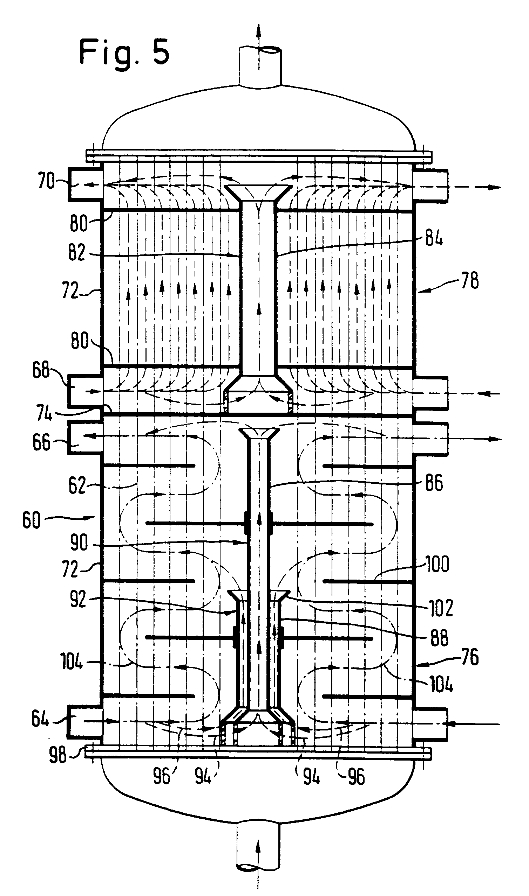

Der Reaktor 60 nach Fig. 5 ähnelt mit einem hohlzylindrischen Rohrbündel 62 und Ringkanälen 64 bis 70 wiederum demjenigen aus Fig. 1. Indessen ist in diesem Fall das Reaktorgehäuse, 72, bei durchgehendem Rohrbündel durch ein Trennblech 74 in zwei übereinanderliegende, voneinander zumindest im wesentlichen getrennte Wärmetauschabschnitte 76 und 78 unterteilt, wie dies etwa gleichfalls aus der DE-OS 2 201 528 bekannt ist. Ebenso sind hier beispielsweise in dem Wärmetauschabschnitt 78 anstelle miteinander abwechselnder Umlenkbleche 20 und 22 zwischen den betreffenden Ringkanälen 68 und 70 in unmittelbarer Nähe derselben durchgehende Verteilerbleche 80 mit Ringspalten um die einzelnen Reaktionsrohre vorgesehen, durch welche diesen entlang eine im wesentlichen axialgerichtete Strömung des Wärmeträger hervorgerufen wird. Dies ändert jedoch nichts daran, daß ein unmittelbar an dem Trennblech 74 entlangstreichender Teilstrom des durch den betreffenden Ringkanal 68 eintretenden Wärmeträgers von dem Trennblech her eine unerwünscht starke Temperaturänderung erfahren kann. Aus diesem Grunde ist auch hier wieder ein Bypasskanal, 82, in Gestalt eines zentralen, an beiden Enden erweiterten Leitrohres 84 vorgesehen, wie bei dem Reaktor 2 nach Fig. 1.

In gleicher Weise weist der darunterliegende Wärmetauschabschnitt 76 ein zentrales Leitrohr 86 auf, jedoch ist dieses in diesem Beispiel noch mit Abstand koaxial von einem weiteren Leitrohr, 88, umgeben, um zwei getrennte Bypasskanäle, 90 und 92, zu bilden. Auf diese Weise kann der durch die Pfeile 94 und 96 bezeichnete Teilstrom des Wärmeträgers aus dem Bereich des unteren Rohrbodens 98 geschichtet abgeführt werden, wobei davon auszugehen ist, daß der durch den Spalt zwischen den Leitrohren 86 und 88 hindurchtretende Anteil eine geringere Temperaturdifferenz gegenüber dem eintretenden Wärmeträger aufweist als der durch das Leitrohr 86 hindurchtretende. Dies macht man sich im vorliegenden Fall dafür zunutze, den geringer unterkühlten Anteil dem Rohrbündel 62 an einer Stelle zuzuführen, wo von Haus aus eine erhöhte Temperatur zu erwarten wäre. Eine solche Stelle ist in der Regel der Bereich des Hot Spot und dort wiederum ein solcher innerhalb eines radial nach innen weisenden Umlenkbleches wie z.B. 100. Demgemäß läßt man das Leitrohr 88 in diesem Bereich, wiederum mit einer Erweiterung, 102, enden, so daß sich der dort austretende Teilstrom des Wärmeträgers mit dem Hauptstrom mischen kann, der in seinem hauptsächlichen Verlauf durch die gepfeilten Linien 104 angegeben ist.

Selbstredend sind nach den vorangehenden Angaben mancherlei weitere Spielarten und Kombinationsmöglichkeiten denkbar.

## Patentansprüche

1. Rohrbündelreaktor für katalytische chemische Gasphasenreaktionen mit positiver oder negativer Wärmetönung, bei dem ein das Reaktionsrohrbündel umspülender Wärmeträger dem Reaktorgehäuse im wesentlichen normal zur Rohrachse von außen nach innen gerichtet in der Nähe eines gaseintrittsseitigen Rohrbodens oder Trennblechs mit von der dortigen Gastemperatur stark unterschiedlicher Temperatur zugeführt und von dem Reaktorgehäuse an einer in bezug auf das Reaktionsgas stromabwärts gelegenen Stelle ab- und einem außenliegenden Wärmetauscher zugeführt wird, dadurch *gekennzeichnet*, daß ein dem betreffenden Rohrboden (6; 98) bzw. Trennblech (74) unmittelbar benachbarter Teilstrom des zugeführten Wärmeträgers von dort weg durch einen im Zentrum des Rohrbündels (4; 42, 44; 62) angeordneten Bypasskanal (26; 50; 82; 90, 92) unter Umgehung der Reaktionsrohre einer stromabwärts, zum Austrittsbereich des Wärmeträgers hin gelegenen Stelle zugeführt wird.

2. Rohrbündelreaktor nach Anspruch 1 mit zylindrischem Reaktionsrohrbündel und radialem Wärmeträgerein- und -austritt, wobei das Zentrum des Reaktionsrohrbündels von Röhren freigehalten ist, dadurch *gekennzeichnet*, daß der Bypasskanal (26; 82; 90, 92) im wesentlichen aus einem koaxial im Zentrum des Rohrbündels (4; 62) angeordneten Leitrohr (28; 84; 86, 88) besteht.

3. Rohrbündelreaktor nach Anspruch 1 mit zwei einander mit Abstand gegenüberliegenden Reaktionsrohrbündelgruppen, dadurch *gekennzeichnet*, daß der Bypasskanal (50) in Gestalt eines einzigen kastenförmigen Leitkanals (52) oder einer Zeile nebeneinanderliegender Leitrohre (54) zwischen den beiden gegenüberliegenden Reaktionsrohrbündelgruppen (42, 44) angeordnet ist.

4. Rohrbündelreaktor nach Anspruch 2 oder 3, dadurch *gekennzeichnet*, daß das jeweilige Leitrohr (28; 54; 84; 86, 88) bzw. der Leitkanal (52) ein- oder - vorzugsweise - beidendig eine trichterartige Erweiterung (30, 32; 102) aufweist.

5. Rohrbündelreaktor nach einem der Ansprüche 2 bis 4, dadurch *gekennzeichnet*, daß der verfügbare periphere Eintrittsquerschnitt des jeweiligen Leitrohres (28; 54; 84; 86, 88) bzw. des Leitkanals (52) mit einer siebartigen Lochplatte (36) abgedeckt ist.

6. Rohrbündelreaktor nach einem der vorhergehenden Ansprüche, dadurch *gekennzeichnet*, daß mehrere derartige Bypasskanäle (90, 92) ineinanderliegend angeordnet sind.

7. Rohrbündelreaktor nach Anspruch 6, dadurch *gekennzeichnet*, daß der äußere (92) bzw. die äußeren der betreffenden ineinanderliegend angeordneten Bypasskanäle (90, 92) noch vor dem Austrittsbereich des Wärmeträgers - vorzugsweise im Bereich eines nach innen weisenden Umlenkblechs (100) - endet bzw. enden.

## Claims

1. A tube reactor for catalytic chemical gas phase reactions with positive or negative heat change, in which a heat-transfer medium washing around the nest of reaction tubes is conveyed to the reactor housing inwards in a direction substantially normal to the tube axis in the vicinity of a gas-inlet-side tube plate or separating sheet with a temperature differing greatly from the gas temperature there and is conveyed away from the reactor housing at a point downstream with respect to the reaction gas and to an external heat exchanger, characterized in that a partial stream of the supplied heat-transfer medium directly adjacent the relevant tube plate (6; 98) or separating sheet (74) is conveyed away from there by a bypass duct (26; 50; 82; 90, 92) arranged in the centre of the nest of tubes (4; 42, 44; 62) by-passing the reaction tubes to apoint lying downstream and towards the outlet area of the heat- transfer medium.

2. A tube reactor according to claim 1 with a cylindrical nest of reaction tubes and radial heat-transfer medium in and oulets, the centre of the nest of reaction tubes being kept free to tubes, characterized in that the bypass duct (26; 82; 90; 92) consists substantially of a guiding tube (28; 84; 86, 88) arranged coaxially in the centre of the nest of tubes (4; 62).

3. A tube reactor according to claim 1 with two groups of reaction tube nests lying spacedly opposite each other, characterized in that the bypass duct (50) is arranged in the form of a single box-type guiding duct (52) or a line of adjoining guiding tubes (54) between the two opposing groups of reaction tube nests (42, 44).

4. A tube reactor according to claim 2 or claim 3, characterized in that the respective guiding tube (28; 54; 84; 86, 88) or the guiding duct (52) comprises a hopper-type widened portion (30, 32; 102) at one end or, preferably, at both ends.

5. A tube reactor according to any one of claims 2 to 4, characterized in that the available peripheral inlet cross section of the respective guiding tube (28; 54; 84; 86, 88) or of the guiding duct (52) is covered with a sieve-type perforated plate (36).

6. A tube reactor according to any one of the preceding claims, characterized in that several such bypass ducts (90, 92) are arranged inside each other.

7. A tube reactor according to claim 6, characterized in that the outer one (92) or the outer ones of the relevant bypass ducts (90, 92) arranged inside each other ends or end before the outlet area of the heat-transfer medium, preferably in the area of a baffle plate (100) facing inwards.

## Revendications

1. Réacteur à faisceau tubulaire pour réactions chimiques catalytiques en phase gazeuse avec chaleur de réaction positive ou négative, dans lequel un caloporteur, circulant autour du faisceau de tubes de réaction est admis dans l'enceinte du réacteur dans une direction sensiblement perpendiculaire à l'axe des tubes, de l'extérieur vers l'intérieur, à proximité d'un fond de tubes ou d'une tôle de séparation située du côte de l'entrée de gaz, à une température très différente de la température du gaz qui y règne, et est évacué de l'enceinte du réacteur au niveau d'un point situé en aval par rapport au gaz de réaction et admis dans un échangeur thermique extérieur,
caractérisé en ce qu'un courant partiel du caloporteur admis, courant partiel immédiatement voisin du fond de tube (6, 98) ou de la tôle de séparation (74), en est évacué à travers un canal de dérivation (26 ; 50 ; 82 ; 90, 92) disposé au centre du faisceau de tubes (4 ; 42, 44 ; 62), en contournant les tubes de réaction et est dirigé vers un point situé en aval en direction vers la zone de sortie du caloporteur.

2. Réacteur à faisceau tubulaire selon la revendication 1, comprenant un faisceau cylindrique de tubes de réaction et des entrée et sortie radiales de caloporteur, le centre du faisceau de tubes de réaction étant exempt de tubes,
caractérisé en ce que le canal de dérivation (26 ; 82 ; 90, 92) est constitué pour l'essentiel d'un tube directeur (28 ; 84 ; 86, 88) disposé de manière coaxiale au centre du faisceau de tubes (4 ; 62).

3. Réacteur à faisceau tubulaire selon la revendication 1, comprenant deux groupes de faisceaux de tubes de réaction opposés et espacés,
caractérisé en ce que le canal de dérivation (50) est conçu sous la forme d'un canal directeur (52) unique en forme de caisson ou d'une rangée de tubes directeurs (54) disposés côte à côte entre les deux groupes de faisceaux de tubes de réaction (42, 44) opposés.

4. Réacteur à faisceau tubulaire selon la revendication 2 ou 3,
caractérisé en ce que le tube directeur respectif (28 ; 54 ; 84 ; 86, 88) ou le canal directeur (52) comporte, à une extrémité ou, de préférence, aux deux extrémités, un élargissement (30, 32 ; 102) en forme d'entonnoir.

5. Réacteur à faisceau tubulaire selon l'une quelconque des revendications 2 à 4,
caractérisé en ce que la section transversale d'entrée périphérique disponible du tube directeur respectif (28 ; 54 ; 84 ; 86, 88) ou du canal directeur (52) est recouverte d'une plaque ajourée (36) semblable à un tamis.

6. Réacteur à faisceau tubulaire selon l'une quelconque des revendications précédentes,
caractérisé en ce que plusieurs canaux de dérivation (90, 92) de ce type sont emboîtés les uns dans les autres.

7. Réacteur à faisceau tubulaire selon la revendication 6,
caractérisé en ce que celui (92) ou ceux des canaux de dérivation emboîtés concernes (90, 92) qui est ou sont situés à l'extérieur aboutit ou aboutissent en déçà de la zone de sortie du caloporteur, de préférence dans la zone d'un déflecteur (100) tourné vers l'intérieur.

# Fig. 1

Fig. 2

Fig. 3

Fig. 4

8

# Fig. 5